Europäisches Patentamt

European Patent Office

Office européen des brevets

(11) Veröffentlichungsnummer: **0 293 875 B1**

(12) # EUROPÄISCHE PATENTSCHRIFT

(45) Veröffentlichungstag der Patentschrift: **26.08.92**

(51) Int. Cl.⁵: **H04M 3/58**, H04Q 3/62

(21) Anmeldenummer: **88108809.0**

(22) Anmeldetag: **01.06.88**

(54) **Verfahren für eine aus einer Hauptsprechstelle und mehreren Nebensprechstellen bestehenden Nebenstellenanlage mit zwei Amtsleitungen.**

(30) Priorität: **04.06.87 DE 3718760**

(43) Veröffentlichungstag der Anmeldung:
**07.12.88 Patentblatt 88/49**

(45) Bekanntmachung des Hinweises auf die
Patenterteilung:
**26.08.92 Patentblatt 92/35**

(84) Benannte Vertragsstaaten:
**AT BE CH DE LI**

(56) Entgegenhaltungen:
**EP-A- 0 122 354**
**FR-A- 1 389 919**

(73) Patentinhaber: **SIEMENS AKTIENGESELL-**
**SCHAFT**
**Wittelsbacherplatz 2**
**W-8000 München 2(DE)**

(72) Erfinder: **Girst, Rudolf, Dipl.-Ing.**
**Heinrich-Lübke-Strasse 3**
**W-8000 München 83(DE)**

## Beschreibung

Die Erfindung betrifft ein Verfahren für eine aus einer Hauptsprechstelle und mehreren Nebensprechstellen bestehenden Nebenstellenanlage mit zwei Amtsleitungen, mit einer internen Stromversorgung, einem Mikroprozessor als Steuerorgan, einer Internschleifenerkennung je Sprechstelle, mit je Amtsleitung jeder Sprechstelle fest zugeordneten, die interne Speisung und die Amtsleitungen an- und abschaltenden Schalteinrichtungen, wobei das Belegen einer freien Amtsleitung durch jede Sprechstelle oder das Weitergeben einer Amtsverbindung an jede Sprechstelle vorgesehen ist.

Eine obengenannte Nebenstellenanlage ist bereits vorgeschlagen worden (DE-A-36 04 538). Diese Nebenstellenanlage enthält in der Hauptsprechstelle zusätzliche Einheiten wie Mikroprozessor, Spannungs- und Stromauswertungen, Ruferkennungen, die auch bei dem erfindungsgemäßen Verfahren vorgesehen sind. Auch erfolgt die Stromversorgung über ein zusätzliches Steckernetzgerät.

Eine ähnliche Nebenstellenanlage ist auch aus der Betriebsanleitung der Deutschen Bundespost, Ausgabe Juli 1982, betreffend Postapparat FeAp 85/89 bekannt.

In beiden Fällen kann eine belegte Amtsleitung durch Nachwahl an eine andere der Nebenstellenanlage angeschlossene Sprechstelle weitergegeben werden. Diese Anlagen funktionieren jedoch nur mit Impulswahlverfahren.

Die Aufgabe der Erfindung soll daher darin bestehen, ein Verfahren zu finden, welches bei Verwendung von entsprechenden Baueinheiten den Betrieb einer solchen Nebenstellenanlage mit Mehrfrequenzverfahren erlaubt.

Dies wird dadurch erreicht, daß jeder Amtsleitung eine Wahlinformation an den gemeinsamen Mikroprozessor weitergebende MFV-Empfangsschaltung fest zugeordnet ist, daß jede MFV-Empfangsschaltung über individuelle mikroprozessorgesteuerte Kontaktpaare mit jeder Sprechstelle verbindbar ist, daß bei Belegen einer Amtsleitung die belegende Sprechstelle durch die ihr und der Amtsleitung zugeordnete Schalteinrichtung an die Amtsleitung und durch das individuelle Kontaktpaar direkt an die der belegten Amtsleitung zugeordnete MFV-Empfangsschaltung anschaltbar ist, daß dadurch der Mikroprozessor Amtswahlende erkennen und eine nachfolgende Wahl als Verbindungsweitergabe an eine andere zweite Sprechstelle auswerten kann, daß nach nachfolgender Wahl die zuerst belegte Sprechstelle durch die ihr und der belegten Amtsleitung zugeordnete Schalteinrichtung an die interne Speisung angeschaltet, an die Amtsleitung eine Halteschaltung und an die zweite Sprechstelle ein interner Ruf angeschaltet wird und daß bei Verbindungsübernahme die zweite Sprechstelle durch die ihr und der belegten Amtsleitung zugeordnete Schalteinrichtung an die Amtsleitung und über das individuelle Kontaktpaar an die MFV-Empfangsschaltung der belegten Amtsleitung angeschaltet und die entsprechende Halteschaltung unwirksam geschaltet wird.

Hieraus ergibt sich der Vorteil, daß eine vorgenannte Nebenstellenanlage ohne großen Aufwand mit MFV-Wahl betrieben werden kann.

Eine vorteilhafte Weiterbildung des erfindungsgemäßen Verfahrens besteht noch darin, daß das Nachwählen mit dem Betätigen einer Flashtaste beginnt. Hieraus ergibt sich der Vorteil, daß MFV-Empfangseinrichtungenerst zu Beginn einer Nachwahl über den Mikroprozessor anschaltbar sind, weshalb die Sprachschutzschaltungen entfallen können.

Das erfindungsgemäße Verfahren wird anhand einer Figur näher erläutert.

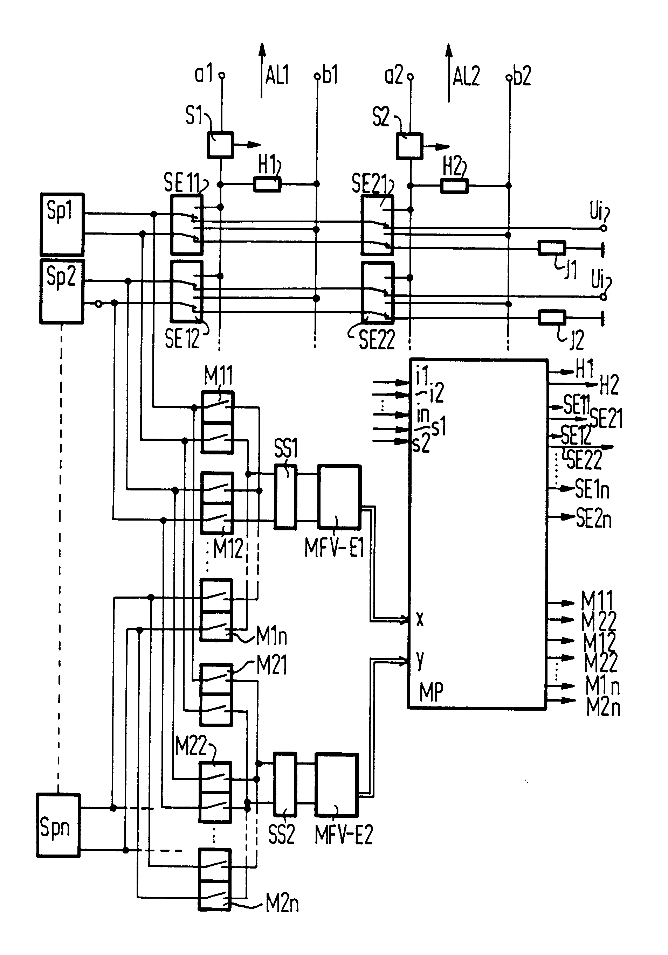

Die Figur enthält im wesentlichen die Sprechstellen Sp1 bis Spn, den Mikroprozessor MP mit den Steuereingängen i1 bis in, s1, s2, x und y sowie den notwendigen Steuerausgängen, die MFV-Empfangsschaltungen MFV-E1 und MFV-E2, die Sprachschutzschaltungen SS1 und SS2, die Kontaktpaare M11 bis M1n und M21 bis M2n, die Schalteinrichtungen SE11, SE21, SE21, SE22, (SE1n, SE2n), die Internschleifenerkennungen I1, I2 (In), die interne Speisung Ui, die Externschleifenerkennungen S1, S2, die Halteschaltungen H1, H2 und die Amtsleitungen AL1, AL2.

Bei dem erfindungsgemäßen Verfahren wird davon ausgegangen, daß eine der in der Figur gezeigten Sprechstellen Sp1 bis Spn die Hauptsprechstelle und die anderen Sprechstellen gleichberechtigte Nebensprechstellen sind. In der Hauptsprechstelle sind der Mikroprozessor MP, alle Speisespannungseinheiten und die Identifizier- und Schalteinheiten untergebracht. Es sind zwei Amtsleitungen AL1 und AL2 vorgesehen, die von allen Sprechstellen aus belegt werden können und es sollen beispielsweise bestehende Amtsverbindungen von der daran beteiligten Sprechstelle an eine andere Sprechstelle der Nebenstellenanlage übergeben werden können. Dabei soll die Wahl der Amtsverbindungen und die Wahl zum Übergeben einer Amtsverbindung mit MFV-Wahl erfolgen.

Es sei angenommen, daß von der Sprechstelle Sp2 aus eine Amtsverbindung zu einem fernen Teilnehmer aufgebaut werden soll. Wird an dieser Sprechstelle Sp2 z.B. durch Abnehmen des Handapparates der Gabelumschaltkontakt geschlossen, dann wird dies von der dieser Sprechstelle zugeordneten, in einer Sprechader angeordneten Internschleifenerkennung I1 erkannt. Die Internschleifenerkennung I1 liegt dabei über Ruhekontakte in den der Sprechstelle zugeordneten, je Amtsleitung vorgesehenen Schalteinrichtungen (SE12, SE22) in dem Kreis der internen Speisespannungsversorgung Ui. Die Internschleifenerkennung I2 meldet den Sprechstellenzustand über den Steuereingang i2 dem Mikroprozessor.

Der Mikroprozessor MP enthält Informationen über den Belegungszustand der Amtsleitungen AL1 und AL2. Sind beide Amtsleitungen frei -was im Beispiel angenommen sei- dann wird die erste Amtsleitung (AL1) belegt und die Schalteinrichtung SE12 wird über den entsprechenden Ausgang des Mikroprozessors MP so angesteuert, daß die Sprechstelle Sp2 an die Adern a1/b1 der Amtsleitung AL1 angeschaltet und von der internen Speisung Ui abgeschaltet wird. Wäre nur die zweite Amtsleitung A12 frei, dann würde die Schalteinrichtung SE22 entsprechend gesteuert werden. Sind beide Amtsleitungen belegt, dann wird intern ein Besetztzeichen an die Sprechstelle Sp2 angelegt.

Die Amtsleitung AL1 sei jedoch frei und es kann nun von der Sprechstelle Sp2 aus eine Amtswahl durchgeführt werden.

Entsprechend dem erfindungsgemäßen Verfahren ist jeder Amtsleitung eine MFV-Empfangsschaltung (MFV-E1 für AL1 und MFV-E2 für AL2) fest zugeordnet. Jeder dieser MFV-Empfangsschaltungen ist je Sprechstelle ein individuell zugeordnetes Kontaktpaar zugeordnet. Die Kontaktpaare M11 bis M1n gehören zur MFV-Empfangsschaltung MFV-E1 und die Kontaktpaare M21 bis M2n gehören zur MFV-Empfangsschaltung MFV-E2.

Wird von einer Sprechstelle aus eine Amtsleitung belegt, dann wird automatisch über den Mikroprozessor MP das Kontaktpaar durchgesteuert, das die Ausgänge dieser Sprechstelle mit dem Eingang der MFV-Empfangsschaltung verbindet, welche der belegten Amtsleitung zugeordnet ist. Im vorliegenden Beispiel ist dies das Kontaktpaar M12. Jeder MFV-Empfangsschaltung ist dabei eine Sprachschutzschaltung SS1 bzw. SS2 vorgeschaltet, die notwendig ist, weil die jeweilige MFV-Empfangsschaltung während des gesamten Verbindungsbestehens angeschaltet ist und daher mit Sprachfrequenzen ungewollt eine Wahlinformation vorgetäuscht werden könnte. Dies muß verhindert werden.

Alle Wahlinformationen an der Sprechstelle Sp2 werden beim Verbindungsaufbau in verwertbarer Form über die jeweilige MFV-Empfangsschaltung -hier MFV-E1- an den Mikroprozessor weitergegeben. Dieser erkennt nun entweder aus einer Information durch die Externschleifenerkennung S1 über seinen Steuereingang s1 oder über ein Zeitkriterium, daß die Amtswahl beendet ist. Jede weitere Wahlinformation, die über die MFV-Empfangsschaltung MFV-E1 den Mikroprozessor erreicht, wird nun als interne Wahl zum Beispiel zur Weitergabe der bestehenden Amtsverbindung an eine andere Sprechstelle der Nebenstellenanlage ausgewertet. Wird beispielsweise an der Sprechstelle Sp2 jetzt eine "1" nachgewählt, dann bedeutet dies, daß die bestehende Amtsverbindung an die Sprechstelle Sp1 übergeben werden soll. Nach der Wahl der "1" wird das die Sprechstelle Sp1 mit der MFV-Empfangseinrichtung MFV-E1 verknüpfende Kontaktpaar M11 durchgeschaltet und die Sprechstelle Sp2 wird über die Schalteinrichtung SE12 wieder an die interne Speisung Ui angeschaltet. Gleichzeitig wird an die Sprechstelle Sp1 ein interner Ruf angeschaltet. Beim Umschalten der Sprechstelle Sp2 auf interne Speisung wird gleichzeitig an die Amtsleitung AL1 die Halteschaltung H1 angeschaltet, so daß die bestehende Verbindung in Wartestellung geht.

Wird an der Sprechstelle Sp1 der anstehende Ruf durch z.B. Abheben des Handapparates entgegengenommen, dann wird dies über die Internschleifenerkennung I1 erkannt und es wird diese Sprechstelle über die Schalteinrichtung SE11 an die Amtsleitung AL1 angeschaltet und die Halteschaltung H1 wird unwirksam geschaltet. Über das Kontaktpaar M11 bleibt die Sprechstelle Sp1 weiter an die MFV-Empfangsschaltung MFV-E1 für den Fall weiterer Wahlinformationen von dort angeschaltet, während die Sprechstelle Sp2 über das Kontaktpaar SE12 von der MFV-Empfangsschaltung MFV-E1 freigeschaltet wird.

In analoger Weise werden bei einer Belegung der Amtsleitung AL2 die Schalteinrichtungen SE21, SE22 (bis SE2n), die Kontaktpaare M21 bis M2n und MFV-Empfangsschaltung MFV-E2 gesteuert. x und y sind die jeweiligen Steuereingänge des Mikroprozessors MP, über die die Informationen der MFV-Empfangsschaltungen eingehen.

Es ist vorgesehen, daß eine Nachwahl an einer Sprechstelle zur Weitergabe der Verbindung an eine andere Sprechstelle dadurch kenntlich gemacht wird, daß zumindest die erste (bei mehrstelligen) Wahlzifferntaste länger gedrückt bleibt. Die Zeitdauer des Druckes gilt dann als Kriterium.

Weiterhin ist vorgesehen, als Kriterium für eine Nachwahl eine Flashtaste vorzusehen. Da mit dieser Flashtaste gleichzeitig die jeweilige MFV-Empfangsschaltung angeschaltet werden könnte, diese also nicht immer an die Sprechstelle angeschaltet ist, würde sich eine Sprachschutzschaltung erübrigen.

## Patentansprüche

1. Verfahren für eine aus einer Hauptsprechstelle und mehreren Nebensprechstellen bestehenden Nebenstellenanlage mit zwei Amtsleitungen, mit einer internen Stromversorgung, einem Mikroprozessor als Steuerorgan, einer Internschleifenerkennung je Sprechstelle, mit je Amtsleitung jeder Sprechstelle fest zugeordneten, die interne Speisung und die Amtsleitungen an- und abschaltenden Schalteinrichtungen, wobei das Belegen einer freien Amtsleitung durch jede Sprechstelle oder das Weitergeben einer Amtsverbindung an jede Sprechstelle vorgesehen ist, **dadurch gekennzeichnet,**
daß jeder Amtsleitung (AL1, AL2) eine Wahlinformationen an den gemeinsamen Mikroprozessor (MP) weitergebende MFV-Empfangsschaltung (MFV-E1, MFV-E2) fest zugeordnet ist, daß jede MFV-Empfangsschaltung (MFV-E1, MFV-E2) über individuelle mikroprozessorgesteuerte Kontaktpaare (M11/M1n, M21/M2n) mit jeder Sprechstelle (Sp1-Spn) verbindbar ist, daß bei Belegen einer Amtsleitung (AL1) die belegende Sprechstelle (z.B. Sp2) durch die ihr und der Amtsleitung (AL1) zugeordnete Schalteinrichtung (SE12) an die Amtsleitung (AL1) und durch das individuelle Kontaktpaar (M12) direkt an die der belegten Amtsleitung (AL1) zugeordnete MFV-Empfangsschaltung (MFV-E1) anschaltbar ist, daß dadurch der Mikroprozessor (MP) Amtswahlende erkennen und eine nachfolgende Wahl als Verbindungsweitergabe an eine andere zweite Sprechstelle (z.B. Sp1) auswerten kann, daß nach nachfolgender Wahl die zuerst belegende Sprechstelle (Sp2) durch die ihr und der belegten Amtsleitung (AL1) zugeordnete Schalteinrichtung (SE11) an die interne Speisung ((Ui) angeschaltet, an die Amtsleitung (AL1) eine Halteschaltung (H1) und an die zweite Sprechstelle (Sp1) ein interner Ruf angeschaltet wird und daß bei Verbindungsübernahme die zweite Sprechstelle (Sp1) durch die ihr und der belegten Amtsleitung (AL1) zugeordnete Schalteinrichtung (SE11) an die Amtsleitung (AL1) und über das individuelle Kontaktpaar (M11) an die MFV-Empfangsschaltung (MFV-E1) der belegten Amtsleitung (AL1) angeschaltet und die entsprechende Halteschaltung (H1) unwirksam geschaltet wird.

2. Verfahren nach Patentanspruch 1, **dadurch gekennzeichnet,** daß jeder MFV-Empfangsschaltung (MFV-E1, MFV-E2) eine Sprachschutzschaltung (SS1, SS2) vorgeschaltet ist.

3. Verfahren nach Patentanspruch 1, **dadurch gekennzeichnet,** daß das Erkennen des Amtswahlendes durch eine Externschleifenerkennung (S1, S2) erfolgt.

4. Verfahren nach Patentanspruch 1, **dadurch gekennzeichnet,** daß das Erkennen des Amtswahlendes durch ein Zeitkriterium erfolgt.

5. Verfahren nach Patentanspruch 1, **dadurch gekennzeichnet,** daß das Nachwählen zum Weitergeben einer bestehenden Verbindung an eine andere Sprechstelle durch längeres Betätigen zumindest der ersten Wahlzifferntaste eingeleitet wird.

6. Verfahren nach Patentanspruch 1 und Patentanspruch 2, **dadurch gekennzeichnet,** daß das Nachwählen mit dem Betätigen einer Flashtaste beginnt.

**Claims**

1. Method for a private branch exchange with two exchange lines, consisting of a main telephone station and several extension telephone stations, with an internal power supply, a microprocessor as control element, an internal loop detection circuit for each telephone station, with switching devices permanently allocated to each telephone station per exchange line and switching the internal power feed and the exchange lines on and off, provision being made for the seizure of a free exchange line by each telephone station or the transferring of an exchange call to each telephone station, characterised in that a dual-tone multi-frequency receiving circuit (MFV-E1, MFV-E2), which forwards dialling information items to the common microprocessor (MP), is permanently allocated to each exchange line (AL1, AL2), in that each dual-tone multi-frequency receiving circuit (MFV-E1, MFV-E2) can be connected to each telephone station (Sp1-Spn) via individual microprocessor-controlled contact pairs (M11/M1n, M21/M2n), in that during the seizing of an exchange line (AL1), the seizing telephone station (for example Sp2) can be connected to the exchange line (AL1) by the switching device (SE12) allocated to it and to the exchange line (AL1) and can be directly connected to the dual-tone multi-frequency receiving circuit (MFV-E1) allocated to the seized exchange line (AL1) by the individual contact pair (M12), in that, as a result, the microprocessor (MP) can detect the end of exchange dialling and evaluate a subsequent dialling as call transfer to another second telephone station (for example Sp1), in that, after subsequent dialling, the first seizing telephone station (Sp2) is connected to the internal power feed (Ui) by the switching device (SE11) allocated to it and to the seized exchange line (AL1), a holding circuit (H1) is connected to the exchange line (AL1) and an internal call is connected to the second telephone station (Sp1), and in that, when taking over the call, the second telephone station (Sp1) is connected to the exchange line (AL1) by the switching device (SE11) allocated to it and to the seized exchange line (AL1) and is connected to the dual-tone multi-frequency receiving circuit (MFV-E1) of the seized exchange line (AL1) via the individual contact pair (M11) and the corresponding holding circuit (H1) is switched to be ineffective.

2. Method according to Claim 1, characterised in that each dual-tone multi-frequency receiving circuit (MFV-E1, MFV-E2) is preceded by a voice protection circuit (SS1, SS2).

3. Method according to Claim 1, characterised in that the end of exchange dialling is detected by an external loop detection circuit (S1, S2).

4. Method according to Claim 1, characterised in that the end of exchange dialling is detected by means of a time criterion.

5. Method according to Claim 1, characterised in that the post-dialling for transferring an existing call to another telephone station is initiated by prolonged operation of at least the first dialling digit key.

6. Method according to Claim 1 and Claim 2, characterised in that the post-dialling begins by operating a flash key.

**Revendications**

1. Procédé pour une installation à postes téléphoniques supplémentaires, constituée par un poste téléphonique principal et plusieurs postes téléphoniques supplémentaires et comportant deux lignes de service, un système interne d'alimentation en courant, un microprocesseur en tant qu'organe de commande, une unité d'identification de boucle interne pour chaque poste téléphonique, et des dispositifs de commutation, associés de façon fixe à chaque poste téléphonique, pour chaque ligne de service, et qui branche et débranche le système d'alimentation interne et les lignes de service, et selon lequel il est prévu l'occupation d'une ligne de service libre par chaque poste téléphonique ou la retransmission d'une liaison de service à chaque poste téléphonique, caractérisé par le fait
qu'à chaque ligne de service (AL1,AL2) est associé, de façon fixe, un circuit de réception MFV (MFV-E1, MFV-E2), qui retransmet des informations de sélection au microprocesseur commun (MP), que chaque circuit de réception MFV (MFV-E1, MFV-E2) peut être raccordé à chaque poste téléphonique (Sp1-Spn) par l'intermédiaire de couples individuels de contacts (M11/M1n, M21/M2n) commandés par le microprocesseur, que lors de l'occupation d'une ligne de service (AL1), le poste téléphonique (par exemple Sp2) exécutant l'occupation peut être raccordé par le dispositif de commutation (SE12), qui lui est associé ainsi qu'à la ligne de service (AL1), à cette ligne de service (AL1) et peut être raccordé directement, par l'intermédiaire du couple individuel de contacts (M12), au circuit de réception MFV (MFV-E1), qui est associé à la ligne de service (AL1) occupée, que de ce fait le microprocesseur (MP) peut identifier la fin d'une sélection de Service et évaluer une sélection suivante en tant que retransmission d'une liaison à un autre second poste téléphonique (par exemple Sp1), qu'après la sélection suivante, le poste téléphonique (Sp2), qui réalise en premier l'occupation, est raccordé au système d'alimentation interne (Ui) par le dispositif de commutation (SE11) qui lui est associé ainsi qu'à la ligne de service (AL1) occupée, qu'un circuit de maintien (H1) est raccordé à la ligne de service (AL1) et qu'un appel interne est appliqué au second poste téléphonique (Sp1), et que, lors du transfert d'une liaison, le second poste téléphonique (SP1) est raccordé à la ligne de service (AL1) par l'intermédiaire du dispositif de commutation (SE11) qui lui est associé ainsi qu'à la ligne de service (AL1) occupée, et est raccordé au circuit de réception MFV (MVF-E1) de la ligne de service (AL1) occupée, par l'intermédiaire du couple individuel de contacts (M11), et que le circuit de maintien (H1) correspondant est rendu inactif.

2. Procédé suivant la revendication 1, caractérisé par le fait qu'un circuit (SS1, SS2) de protection des signaux vocaux est branché en amont de chaque circuit de réception MFV (MFV-E1, MFV-E2).

3. Procédé suivant la revendication 1, caractérisé par le fait que l'identification de la fin de la sélection de service est réalisée au moyen d'une unité (S1,S2) d'identification de boucle externe.

4. Procédé suivant la revendication 1, caractérisé par le fait que l'identification de la fin de la sélection de service est réalisée au moyen d'un critère temporel.

5. Procédé suivant la revendication 1, caractérisé par le fait que la sélection ultérieure pour la retransmission d'une liaison existante à un autre poste téléphonique est déclenchée au moyen d'un actionnement plus long au moins de la première touche du chiffre de sélection.

6. Procédé suivant les revendications 1 et 2, caractérisé par le fait que la sélection ultérieure commence avec l'actionnement d'une touche flash.